# EUROPÄISCHE PATENTANMELDUNG

(11) **EP 1 342 985 A1**
(43) Veröffentlichungstag der Anmeldung: **10.09.2003**
(21) Anmeldenummer: 03002496.2
(22) Anmeldetag: 06.02.2003
(51) Int. Cl.: G01B 11/12, G01B 11/02, G01B 11/24

(54) **Verfahren und Vorrichtung zur Messung des Verschleisses der inneren Oberfläche von Rohren**

(30) Priorität: 06.03.2002 DE 10209953
(71) Anmelder: Rheinmetall W & M GmbH, 29345 Unterlüss (DE)
(72) Erfinder: Schlenkert, Gert, 40233 Düsseldorf (DE); Reckeweg, Horst, 42579 Heiligenhaus (DE); Vogt, Göran, 30938 Burgwedel (DE)
(74) Vertreter: Dietrich, Barbara

(57) **Zusammenfassung**

Die Erfindung betrifft ein Verfahren und eine Vorrichtung zur Messung des Verschleißes der inneren Oberfläche (12) von Rohren (1), insbesondere von Waffenrohren.

Um zu erreichen, daß der Verschleiß der inneren Oberfläche (12) von Rohren (1) sehr genau bestimmt werden kann, schlägt die Erfindung vor, mit Hilfe eines Lichtpunkt-Triangulationssensors (6) die innere Oberfläche (12) des jeweiligen zu überprüfenden Rohres (1) berührungslos abzuscannen und für ausgewählte Sensorpositionen den jeweiligen Abstand zwischen der inneren Oberfläche (12) und der Rohrachse (7) zu ermitteln. Aus den ermittelten Abstandsänderungen wird dann auf die Kontur der inneren Oberfläche (12) des jeweiligen Rohres (1) geschlossen. Dabei hat es sich als vorteilhaft erwiesen, die gemessenen Abstandswerte in Form einer C-Bilddarstellung auf einem Bildschirm (23) darzustellen, wobei unterschiedliche Abstandsbereiche durch unterschiedliche Farben gekennzeichnet sind, so daß fehlerhafte Oberflächenbereiche sofort optisch erkannt werden können.

## Beschreibung

Die Erfindung betrifft ein Verfahren zur Messung des Verschleißes der inneren Oberfläche von Rohren, insbesondere von Waffenrohren. Die Erfindung bezieht sich ferner auf eine Vorrichtung zur Durchführung dieses Verfahrens.

Durch die heißen Treibladungsgase bzw. durch die Reibung zwischen Geschoß und innerer Oberfläche des entsprechenden Waffenrohres tritt bei letzteren ein erosiver bzw. abrasiver Verschleiß auf, der die Lebensdauer des jeweiligen Waffenrohres beeinflußt. Daher muß der Verschleiß von Waffenrohren von Zeit zu Zeit überprüft werden. Zur Messung des Verschleißes ist bereits vorgeschlagen worden, die Oberfläche des zu prüfenden Rohres mechanisch abzutasten. Nachteilig ist bei diesem Verfahren, daß es sehr zeitaufwendig und relativ ungenau ist.

Der Erfindung liegt die Aufgabe zugrunde, ein Verfahren anzugeben, mit dem der Verschleiß der inneren Oberfläche von Rohren sehr genau bestimmt werden kann. Außerdem soll eine Vorrichtung zur Durchführung des Verfahrens angegeben werden.

Diese Aufgabe wird hinsichtlich des Verfahrens durch die Merkmale des Anspruchs 1 und hinsichtlich der Vorrichtung durch die Merkmale des Anspruchs 3 gelöst. Weitere, besonders vorteilhafte Ausgestaltungen der Erfindung offenbaren die Unteransprüche.

Die Erfindung beruht im wesentlichen auf dem Gedanken, mit Hilfe eines Lichtpunkt-Triangulationssensors die innere Oberfläche des jeweils zu überprüfenden Rohres berührungslos abzuscannen und für ausgewählte Sensorpositionen den jeweiligen Abstand zwischen der inneren Oberfläche und der Rohrachse zu ermitteln. Aus den ermittelten Abstandsänderungen kann dann auf die Kontur der inneren Oberfläche des jeweiligen Rohres geschlossen werden. Dabei hat es sich als vorteilhaft erwiesen, die gemessenen Abstandswerte in Form einer C-Bilddarstellung auf einem Bildschirm darzustellen, wobei unterschiedliche Abstandsbereiche durch unterschiedliche Farben gekennzeichnet werden können, so daß fehlerhafte Oberflächenbereiche sofort optisch erkannt werden.

Die Vorrichtung zur Messung des Verschleißes der inneren Oberfläche umfaßt einen in das jeweilige Rohr einschiebbaren und einen Lichtpunkt-Triangulationssensor enthaltenden Manipulator sowie eine zur Ansteuerung des Manipulators erforderliche Steuereinheit und eine mit dem Sensor verbundene Signalauswerteeinrichtung. Der Manipulator enthält ein um die Rohrachse drehbares Gehäuse, in dem eine mit dem Gehäuse drehfest verbundene axiale Führung vorgesehen ist. Entlang dieser Führung ist der Triangulationssensor längsverschiebbar angeordnet. Das drehbare Gehäuse weist außerdem eine sich in Richtung der Rohrachse erstreckende spaltförmige Öffnung auf, durch welche das von der Lichtquelle des Triangulationssensors ausgesandte Licht nach außen sowie das von der inneren Oberfläche des Rohres reflektierte Licht auf den Detektor des Sensors gelangt. Das drehbare Gehäuse stützt sich an seinen beiden Enden in Lagerböcken ab, welche über radial verschiebbare Halteelemente an den Innenwänden des Rohres fixierbar sind und eine automatische Zentrierung des Manipulators im Rohr ermöglichen.

Durch die beidseitige Abstützung des Manipulators im Rohr wird sichergestellt, daß der Triangulationssensor bei seiner axialen Verschiebung relativ genau entlang der Rohrachse bewegbar ist. Außerdem ergibt sich ein ruhiger Lauf des Gehäuses bei seiner Drehung um die Rohrachse. Schließlich ist der Triangulationssensor durch das drehbare Gehäuse gegen mechanische Beschädigung geschützt.

Als Lichtquelle des Lichtpunkt-Triangulationssensors wird vorzugsweise eine Laserdiode verwendet, da diese gegenüber anderen Lichtquellen (z.B. Leuchtdioden) bessere Abstrahleigenschaften besitzt und eine kompakte Sensorbauweise erlaubt.
Als Detektor des Triangulationssensors haben sich aufgrund ihrer hohen Empfindlichkeitbesonders CCD-Zeilensensoren (CCD-charge coupled device) bewährt.

Weitere Einzelheiten und Vorteile der Erfindung ergeben sich aus dem folgenden anhand von Figuren erläuterten Ausführungsbeispiel. Es zeigen:
Fig.1 den Längsschnitt durch ein Waffenrohr sowie eine erfindungsgemäße Vorrichtung, die einen in dem Waffenrohr angeordneten Manipulator mit Lichtpunkt-Triangulationssensor umfaßt, sowie
Fig.2 und 3 zwei vergrößerte Darstellungen von Querschnitten durch das in Fig.1 dargestellte Waffenrohr mit Manipulator entlang der dort mit II-II und III-III bezeichneten Schnittlinien.

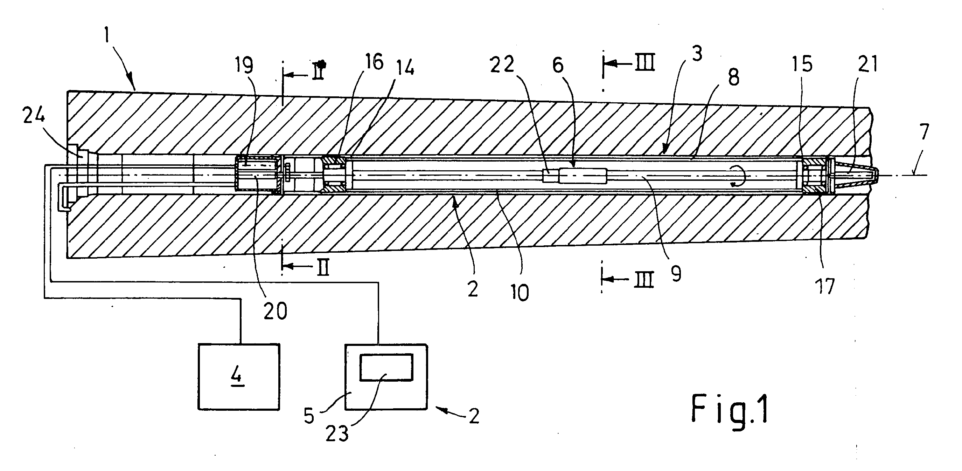

In Fig. 1 ist mit 1 ein Waffenrohr und mit 2 eine erfindungsgemäße Vorrichtung 2 bezeichnet. Die erfindungsgemäße Vorrichtung 2 umfaßt einen in dem Waffenrohr 1 befindlichen Manipulator 3, eine externe Steuereinheit 4 zur Ansteuerung des Manipulators sowie eine Signalauswerteeinrichtung 5, die mit einem in dem Manipulator 3 befindlichen Lichtpunkt-Triangulationssensor 6 verbunden ist.

Der Manipulator 3 umfaßt ein um die Rohrachse 7 drehbares Gehäuse 8, in dem eine mit dem Gehäuse 8 drehfest verbundene axiale Führung 9 vorgesehen ist. Entlang dieser Führung ist der Triangulationssensor 6 längsverschiebbar angeordnet. Das drehbare Gehäuse 8 weist eine sich in Richtung der Rohrachse 7 erstreckende spaltförmige Öffnung 10 auf, durch welche das von der Lichtquelle 11 des Lichtpunkt-Triangulationssensors 6 ausgesandte Licht nach außen sowie das von der inneren Oberfläche 12 des Rohres 1 reflektierte Licht auf den Detektor 13 des Triangulationssensors 6 gelangt.

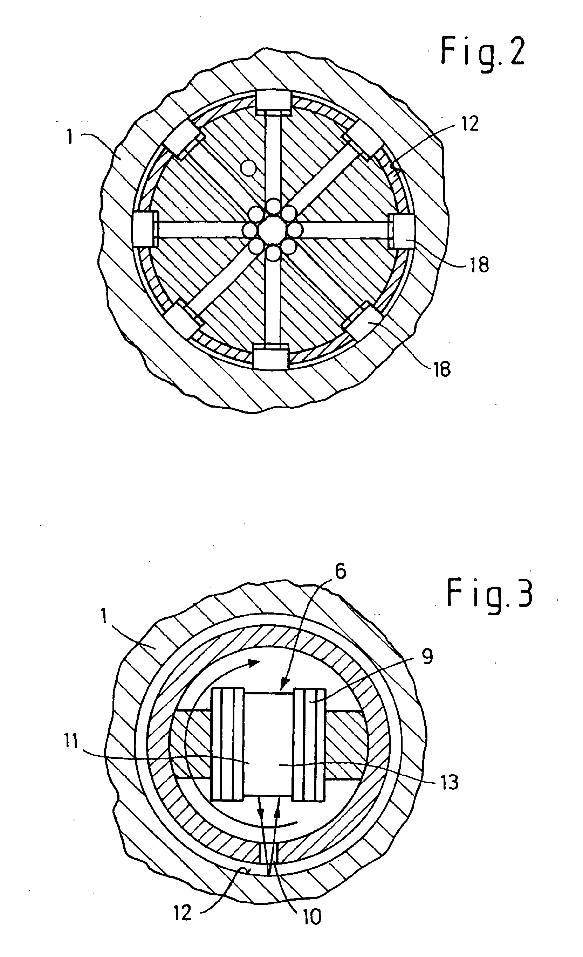

Das drehbare Gehäuse 8 stützt sich an seinen beiden Enden 14, 15 in Lagerböcken 16, 17 ab, welche über radial verschiebbare Halteelemente 18 (Fig.2) an der inneren Oberfläche 12 des Waffenrohres 1 fixiert sind. Zur radialen Verschiebung der Halteelemente 18 sowie zur axialen Verschiebung des Lichtpunkt-Triangulationssensors 6 entlang der Führung 9 und zur Drehung des Gehäuses 8 umfaßt der Manipulator 3 mehrere elektrische Antriebe 19-22.

Als Lichtpunkt-Triangulationssensor 6 wurde bei dem dargestellten Ausführungsbeispiel ein Sensor mit einer Laserdiode als Lichtquelle 11 und ein CCD-Zeilensensor als Detektor 13 verwendet (zum Aufbau und zur Wirkungsweise derartiger Lichtpunkt-Triangulationssensoren vgl. z.B. _{"}Sensortechnik":Handbuch für Praxis und Wissenschaft/Hrsg.: Hans-Rolf Tränkler; Ernst Obermeier. Springer 1998, Seiten 571-580).

Nachfolgend wird auf die Messung des Verschleißes der Oberfläche 12 des Waffenrohres 1 mittels der erfindungsgemäßen Vorrichtung eingegangen:

Zunächt wird der Manipulator 3 in das Waffenrohr 1 von dem Ladungsraum 24 aus eingeführt und in bezug auf einen vorgegebenen Nullpunkt des Waffenrohres ausgerichtet, wobei mittels der Halteelemente 18 gleichzeitig eine zentrische Ausrichtung in bezug auf die Rohrachse 7 erfolgt, so daß der Triangulationssensor 6 zur Oberfläche 12 des Rohres 1 im unbeschädigten Bereich immer den gleichen Abstand aufweist. Nach der Fixierung des Manipulators 3 in dem Waffenrohr 1 kann der Triangulationssensor 6 von einer Ausgangsstellung (Homeposition) entlang der Führung 9 mit Hilfe des elektrischen Antriebes 22 zu einem beliebigen Startpunkt innerhalb des Meßbereiches gefahren werden. Der zurückgelegte Weg von der Homeposition bis zum Startpunkt kann an einem Bildschirm 23 der Signalauswerteeinrichtung 5 abgelesen werden. Alternativ ist es auch möglich, einen Abstandswert direkt einzugeben, worauf der Manipulator 3 den Sensor 6 automatisch an diesen Ort bewegt.

Nach Eingabe der entsprechenden Daten startet der Manipulator 3 und führt den Scanvorgang vollautomatisch durch. Dabei rotiert das Gehäuse 8 mit dem Triangulationssensor 6 um die Rohrachse 7, und gleichzeitig wird der Sensor 6 entlang der Führung 9 und damit entlang der Rohrachse 7 verschoben, so daß sich ein Spindelvorschub des Triangulationssensors 6 ergibt. Der Triangulationssensor 6 mißt in bestimmten Zeitintervallen die Entfernung zur Oberfläche 12 des Waffenrohres 1. Hierzu wird entsprechend einer vorgegebenen Taktrate (z.B. von 4 KHz) ein Laserstrahl ausgesandt, der auf die zu prüfende Rohroberfläche 12 fällt und von dieser zurückreflektiert bzw. gestreut wird. Der reflektierte bzw. gestreute Strahlanteil wird dann von dem Detektor 13 des Triangulationssensors 6 empfangen. Der Sensor 6 registriert alle Abstandsänderungen in bezug auf einen Grundabstand (Stand-Off), der im wesentlichen dem Abstand zwischen dem Laseraustrittspunkt des Sensors 6 und der Mitte des Meßbereiches entspricht. Bewertet werden elektrische Spannungsänderungen, die mit den Abstandsänderungen korrelieren. Diese Spannungsdifferenzen werden anschließend digitalisiert und in einem Mikrorechner der Signalauswerteeinrichtung 5 weiterverarbeitet. Insbesondere können unterschiedliche Abstands- und damit auch Spannungswerte mittels der Signalauswerteeinrichtung 5 unterschiedlichen Farben zugeordnet werden, die dann auf dem Bildschirm 23 der Signalauswerteeinrichtung 5 dargestellt werden. Der dargestellte Farbverlauf gibt die geometrische Beschaffenheit der Oberfläche 12 des Waffenrohres 1 wieder.

' Die Positionsänderungen des Laserpunktes auf der Rohroberfläche werden, ausgehend von dem Meßstartpunkt, mittels (nicht dargestellter) Wegaufnehmer, die z.B. an dem drehbaren Gehäuse 8 und an dem Triangulationssensor 6 angeordnet sein können, registriert. Die Lage der Fehlstellen können daher exakt ermittelt und deren flächenhafte Ausdehnung errechnet werden.

Nach Beendigung des Scanvorganges stoppt der Manipulator 3. Der Bediener hat nach dem Speichern der Meßdaten die Möglichkeit, den Triangulatiuonssensor 6 automatisch an die Startposition zurückzufahren oder einen nachfolgenden Scanvorgang von der Endposition des ersten Scanvorganges aus durchzuführen.

Soll der Manipulator 3 aus dem Rohr 1 entfernt werden, muß der Triangulationssensor 6 zunächst auf seine Homeposition zurückgefahren werden.

Die erfindungsgemäße Vorrichtung 2 muß von Zeit zu Zeit mit Hilfe eines Ringes, dessen Innendurchmesser bekannt ist und dessen innere Oberfläche keinen Verschleiß aufweist, kalibriert werden. Die dabei gemessenen und verarbeiteten Meßwerte werden anschließend mit dem bekannten Durchmesser des Ringes verglichen und, sofern erforderlich, die Vorrichtung abgeglichen. Dieser Vorgang erfolgt automatisch, d.h. der Manipulator fährt selbständig den Kalibrierbereich an, mißt die Durchmesserwerte, vergleicht diese Werte mit den vorgegebenen Werten und gleicht die Vorrichtung anschließend ab. Die Korrekturwerte werden auf dem Bildschirm 23 angezeigt und bei Überschreitung gewisser Toleranzwerte erfolgt eine Meldung, die zur Überprüfung der gesamten Vorrichtung auffordert. Vorzugsweise kann der Kalibrierkörper in der Vorrichtung integriert sein.

Um die Meßdaten in bezug auf die tatsächliche Rohrachse des Waffenrohres darstellen und auswerten zu können, müßte ein Manipulator verwendet werden, der zu jedem Zeitpunkt des Scanvorganges den Sensor exakt um diese Achse dreht. Verschleißstellen im Einspannbereich der Mechanik, eine eventuelle Biegung des Rohres in axialer Richtung oder der Versatz des Ladungsraumes zum Rohrbereich mit Feldern und Zügen, führen zur dezentralen Lage des Manipulators und somit auch des Triangulationssensors im Rohr. Um diese mechanischen Einflüsse zu kompensieren, müssen die aufgenommenen Meßwerte des Sensors vor der Auswertung korrigiert werden, um somit eine Verfälschung des Meßergebnisses zu vermeiden. Die Korrekturwerte (Versatz zwischen der Achse, entlang der sich der Sensor bewegt, und der Rohrachse) können aus den gemessenen Abstandswerten hergeleitet werden, wobei mindestens zwei Meßwerte vorliegen müssen, die an unterschiedlichen Winkelpositionen aufgenommen wurden.

### Bezugszeichenliste

- 1: Waffenrohr, Rohr
- 2: Vorrichtung
- 3: Manipulator
- 4: Steuereinheit
- 5: Signalauswerteeinrichtung
- 6: Lichtpunkt-Triangulationssensor, Sensor
- 7: Rohrachse
- 8: Gehäuse
- 9: Führung
- 10: Öffnung
- 11: Lichtquelle
- 12: Rohroberfläche, Oberfläche
- 13: Detektor
- 14,15: Enden (Gehäuse)
- 16,17: Lagerböcke
- 18: Halteelement
- 19-22: elektrische Antriebe
- 23: Bildschirm
- 24: Ladungsraum

## Patentansprüche

1. Verfahren zur Messung des Verschleißes der inneren Oberfläche (12) von Rohren (1), insbesondere von Waffenrohren,
**dadurch gekennzeichnet,**
**dass** mit einem in das Rohr (1) einführbaren und entlang der Rohrachse (7) verschiebbar sowie um die Rohrachse (7) drehbar angeordneten Lichtpunkt-Triangulationssensor (6) die zu überprüfende Rohroberfläche (12) abgescannt und für ausgewählte Sensorpositionen der jeweilige Abstand der inneren Rohroberfläche (12) von dem Sensor (6) gemessen und hieraus der Abstand von der Rohrachse (7) ermittelt wird und daß aus diesen Abstandswerten dann ein C-Bild der Rohroberfläche (12) bestimmt und gegebenenfalls auf einem Bildschirm (23) dargestellt wird.

2. Verfahren nach Anspruch 1,
**dadurch gekennzeichnet,**
**dass** unterschiedliche Abstandswerte mit einer unterschiedlichen Farbe auf dem Bildschirm dargestellt werden.

3. Vorrichtung zur Messung des Verschleißes der inneren Oberfläche (12) von Rohren (1), insbesondere von Waffenrohren, mit den Merkmalen:
a) die Vorrichtung (2) umfaßt einen in das jeweilige Rohr (1) einschiebbaren und einen Lichtpunkt-Triangulationssensor (6) enthaltenden Manipulator (3), eine zur Ansteuerung des Manipulators (3) erforderliche Steuereinheit (4) sowie eine mit dem Sensor (6) verbundene Signalauswerteeinrichtung (5);
b) der Manipulator (3) umfaßt ein um die Rohrachse (7) drehbares Gehäuse (8), in dem eine mit dem Gehäuse (8) drehfest verbundene axiale Führung (9) vorgesehen ist, auf welcher der Triangulationssensor (6) längsverschiebbar angeordnet ist;
c) das drehbare Gehäuse (8) weist eine sich in Richtung der Rohrachse (7) erstreckende spaltförmige Öffnung (10) auf, durch welche das von der Lichtquelle (11) des Lichtpunkt-Triangulationssensors (6) ausgesandte Licht nach außen sowie das von der inneren Oberfläche (12) des Rohres (1) reflektierte oder gestreute Licht auf den Detektor (13) des Sensors (6) gelangt.
d) das drehbare Gehäuse (8) stützt sich an seinen beiden Enden (14,15) in Lagerbökken (16,17) ab, welche über radial verschiebbare Halteelemente (18) an der inneren Oberfläche (12) des Rohres (1) fixierbar sind.

4. Vorrichtung nach Anspruch 3,
**dadurch gekennzeichnet,**
**dass** der Manipulator (3) zur axialen Verschiebung des Lichtpunkt-Triangulationssensors (6) entlang der Führung (9) sowie zur Drehung des drehbaren Gehäuses (8) durch die Steuereinheit (4) ansteuerbare elektrische Antriebe (19,22) umfaßt.

5. Vorrichtung nach Anspruch 3 oder 4,
**dadurch gekennzeichnet,**
**dass** es sich bei dem Detektor (13) des Lichtpunkt-Triangulationssensors (6) um einen CCD-Zeilensensor handelt.

6. Vorrichtung nach einem der Ansprüche 3 bis 5,
**dadurch gekennzeichnet,**
**dass** es sich bei der Lichtquelle (11) des Lichtpunkt-Triangulationssensors (6) um eine Laserdiode handelt.
